# EUROPEAN PATENT APPLICATION

(11) **EP 2 033 774 A1**
(43) Date of publication of application: **11.03.2009**
(21) Application number: 07115652.5
(22) Date of filing: 04.09.2007
(51) Int. Cl.: B32B 27/00

(54) **Substrate module having three-dimensional structures formed on a surface thereof and method for manufacturing the same**

(71) Applicant: Silitech Technology, Tamsui Teipei Hsien (TW)
(72) Inventor: Yao, Wen-Chin, Taipei County (TW); Kang, Yao-Nan, Taipei County (TW); Hunag, Yu-Shih, Taipei City (TW)
(74) Representative: Viering, Jentschura & Partner

(57) **Abstract**

A method for manufacturing a substrate module (M1, M2) that has three-dimensional structures formed on a surface thereof, includes forming a color layer (4a) on a top surface of a substrate layer (1a); forming a first 3D structure layer (3a') on a bottom surface of the substrate layer (1a) via a first transparent tooling (2a); and curing the first 3D structure layer (3a') via lights (L1) passing through the first transparent tooling (2a) in order to harden the first 3D structure layer (3a'). Moreover, the method further includes forming a second 3D structure layer (3b') on a top surface of the color layer (4a) via a second transparent tooling (2b); and curing the second 3D structure layer (3b') via lights (L2) passing through the second transparent tooling (2b) in order to harden the second 3D structure layer (3b'). Hence, the first 3D structure layer (3a') and the second 3D structure layer (3b') are formed on the bottom surface and the top surface of the substrate module (M2), respectively.

## Description

### BACKGROUND OF THE INVENTION

### 1. Field of the Invention

The present invention relates to a substrate module and a method for manufacturing the same, and particularly relates to a substrate module having three-dimensional structures formed on a surface thereof and a method for manufacturing the same.

### 2. Description of the Related Arf

With the development of information technologies and the advance of network technologies, mobile phones (or cell phones) have grown to be one of the most widespread communication tools. Cell phones have become increasingly popular for consumers due to small size, portability, versatile function, and most importantly, their steadily decreasing price. In terms of purchasing cell phones, the appearance and functions are the determining factors for a majority of buyers. Hence, the market responds to this trend by placing multi-functional, new and attractive cell phones on the market.

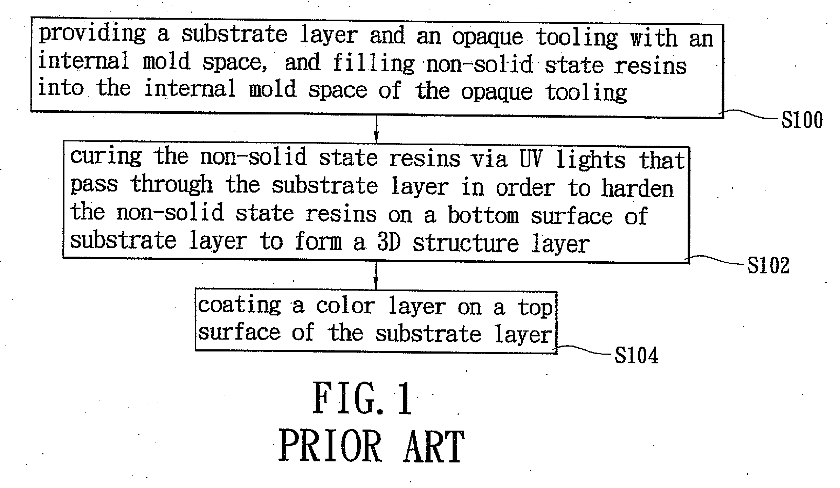

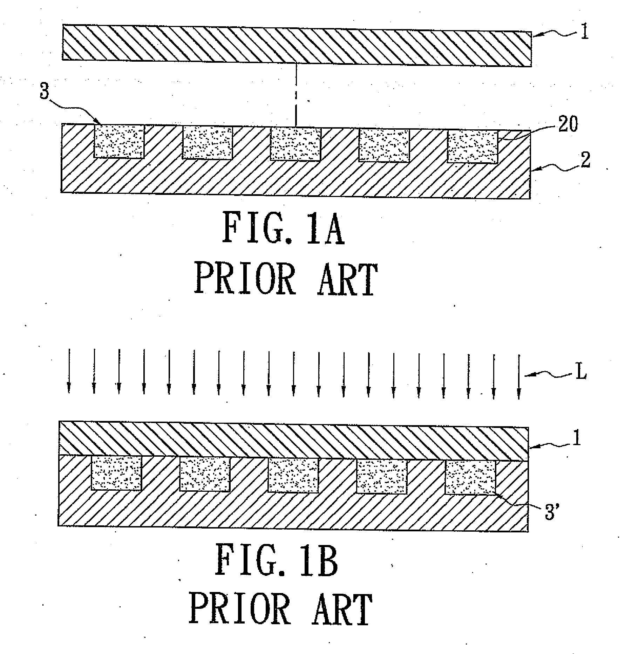

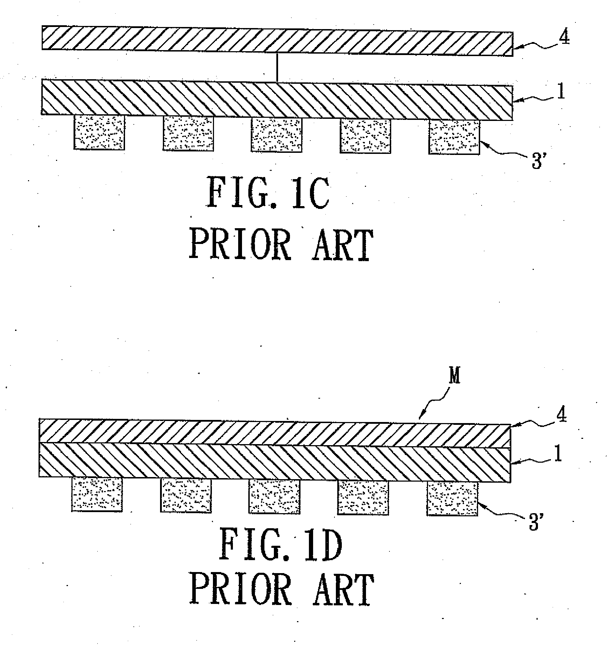

Referring to Figs. 1 and 1A to 1B, Fig. 1 shows a flow chart of a method for manufacturing a substrate module that has three-dimensional structures formed on a surface thereof according to the related art, and Figs. 1A to 1D show cross-sectional, schematic views of a manufacturing process of a substrate module with 3D structure according to the related art, respectively. The related art provides a method for manufacturing a substrate module having three-dimensional structures formed on a surface thereof. The method includes: firstly, referring to Fig. 1A, providing a substrate layer 1 and an opaque tooling 2 with an internal mold space 20, and filling non-solid state resins 3 into the internal mold space 20 of the opaque tooling 2 (S100).

Referring to Fig. 1B, the method further includes: curing the non-solid state resins 3 via UV lights L that pass through the substrate layer 1 in order to harden the non-solid state resins 3 on a bottom surface of substrate layer 1 to form a 3D structure layer 3' (S102). Finally, referring to Figs. 1C and 1D, coating a color layer 4 on a top surface of the substrate layer 1 (S104) for finishing manufacturing the substrate module M that has three-dimensional structures (the 3D structure layer 3') formed on the surface thereof. Hence, designer can design any type of key structure according to customers need.

However, the method for manufacturing the substrate module M of the related art has some following defects:
1. The 3D structure layer 3' needs to be formed on the bottom surface of the substrate layer 1 first, and then the color layer 4 is formed on the top surface of the substrate layer 1. Hence, the yield rate of the substrate module M is decreased and the manufacture cost of the substrate module M is increased.
2. Because the opaque tooling 2 is made of opaque material, the UV light L is limited to pass through the substrate layer 1 only.
3. Because the UV light L only can pass through the substrate layer 1, the 3D structure layer 3' only can formed on one single face of the substrate module M.

### SUMMARY OF THE INVENTION

One particular aspect of the present invention is to provide a substrate module having three-dimensional structures formed on a surface thereof and a method for manufacturing the same. The present invention provides a transparent tooling, so UV lights can pass through the transparent tooling. In other words, the projection direction of the UV lights do not be limited. Hence, the present invention can solve the prior problem that the substrate layer of the prior art needs to be transparent and the color layer of the prior art does not be coated firstly. Moreover, the substrate module has 3D structures formed on two sides thereof at the same time.

In order to achieve the above-mentioned aspects, the present invention provides a substrate module having three-dimensional structures formed on a surface thereof. The substrate module includes a color layer, a substrate layer, and a first 3D structure layer. The substrate layer is formed on a bottom surface of the color layer. The first 3D structure layer is formed on a bottom surface of the substrate layer via using a first transparent tooling and using lights to pass through the first transparent tooling for curing the first 3D structure layer.

Moreover, the substrate module further includes a second 3D structure layer formed on a top surface of the color layer via using a second transparent tooling and using lights to pass through the second transparent tooling for curing the second 3D structure layer. Hence, the first 3D structure layer and the second 3D structure layer are formed on the bottom surface and the top surface of the substrate module, respectively.

In order to achieve the above-mentioned aspects, the present invention provides a method for manufacturing a substrate module that has three-dimensional structures formed on a surface thereof, comprising: forming a color layer on a top surface of a substrate layer; forming a first 3D structure layer on a bottom surface of the substrate layer via a first transparent tooling; and curing the first 3D structure layer via lights passing through the first transparent tooling in order to harden the first 3D structure layer.

Moreover, the method of the present invention further comprises: forming a second 3D structure layer on a top surface of the color layer via a second transparent tooling; and curing the second 3D structure layer via lights passing through the second transparent tooling in order to harden the second 3D structure layer. Hence, the first 3D structure layer and the second 3D structure layer are formed on the bottom surface and the top surface of the substrate module, respectively.

In conclusion, the substrate module with three-dimensional structures formed on the surface thereof and the method for manufacturing the same have following advantages:
1. The color layer can be formed on the substrate layer firstly, and then the first 3D structure layer is formed on the bottom surface of the substrate layer or the second 3D structure layer is formed on the top surface of the color layer. Hence, the yield rate of the substrate module is increased and the manufacture cost of the substrate module is decreased.
2. Because the first transparent tooling and the second transparent tooling are made of transparent materials, the UV lights can selectively pass through the first transparent tooling and the second transparent tooling or pass through the substrate layer the same as the prior art.
3. The projection direction of the UV lights do not be limited, so the first 3D structure layer and the second 3D structure layer are formed on the bottom surface and the top surface of the substrate module, respectively.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF THE DRAWINGS

The various objects and advantages of the present invention will be more readily understood from the following detailed description when read in conjunction with the appended drawings, in which:
Fig. 1 is a flow chart of a method for manufacturing a substrate module that has three-dimensional structures formed on a surface thereof according to the related art;
Figs. 1A to 1D are cross-sectional, schematic views of a manufacturing process of a substrate module with 3D structure according to the related art;
Fig. 2 is a flow chart of a method for manufacturing a substrate module that has three-dimensional structures formed on a surface thereof according to the first embodiment of the present invention;
Figs. 2A to 2D are cross-sectional, schematic views of a manufacturing process of a substrate module with 3D structure according to the first embodiment of the present invention;
Fig. 3 is a flow chart of a method for manufacturing a substrate module that has three-dimensional structures formed on a surface thereof according to the second embodiment of the present invention; and
Figs. 3A to 3C are cross-sectional, schematic views of a manufacturing process of a substrate module with 3D structure according to the second embodiment of the present invention.

### DETAILED DESCRIPTION OF THE PREFERRED EMBODIMENTS

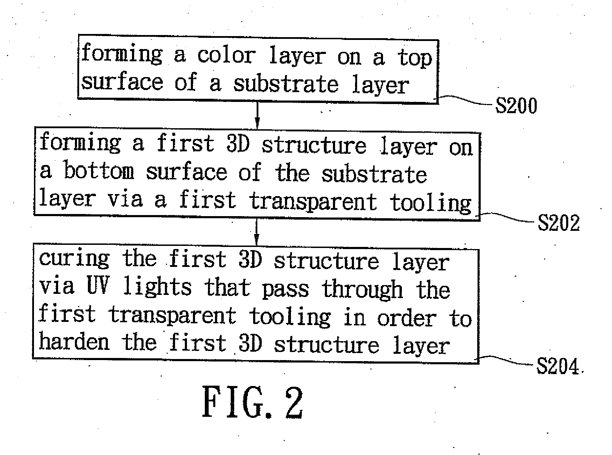

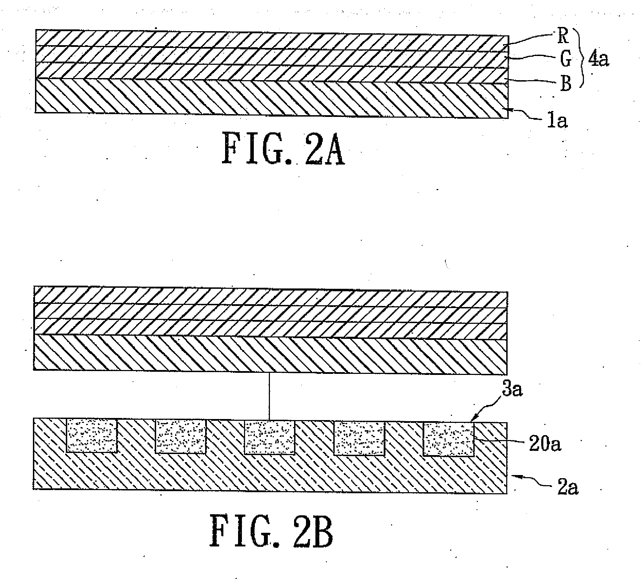

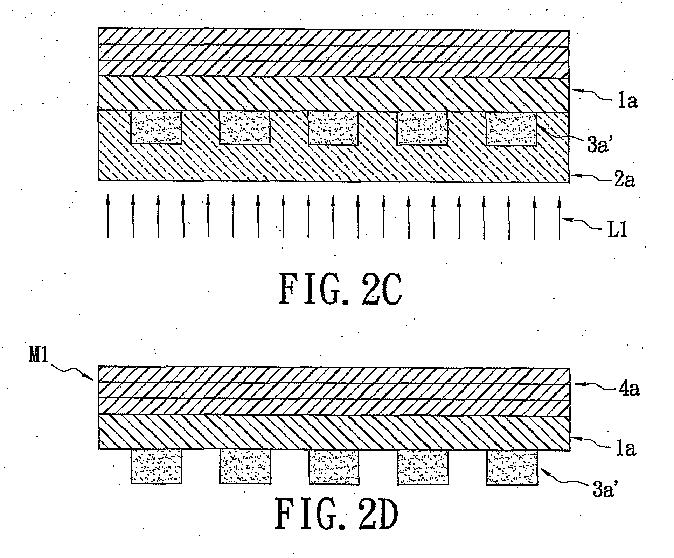

Fig. 2 shows a flow chart of a method for manufacturing a substrate module that has three-dimensional structures formed on a surface thereof according to the first embodiment of the present invention. Figs. 2A to 2D show cross-sectional, schematic views of a manufacturing process of a substrate module with 3D structure according to the first embodiment of the present invention, respectively.

Referring to Fig. 2, the first embodiment of the present invention provides a method for manufacturing a substrate module that has three-dimensional structures formed on a surface thereof. The method includes: firstly, referring to Fig. 2A, forming a color layer 4a on a top surface of a substrate layer 1a (S200). The color layer 4a can be at least one color or be composed of many colors. In the first embodiment, the color layer 4a is composed of a red layer R, a green layer G, and a blue layer B.

Referring to Fig. 2B and 2C, the method further includes: filling non-solid state resins 3a into an internal mold space 20a of a first transparent tooling 2a, and then curing the non-solid state resin 3a via lights such as UV lights L1 that pass through the first transparent tooling 2a in order to harden the non-solid state resin 3a to form a first 3D structure layer 3a' on a bottom surface of the substrate layer 1a.

In other words, after the step of S200, the method includes forming a first 3D structure layer 3a' on a bottom surface of the substrate layer 1a via a first transparent tooling 2a (S202), and then curing the first 3D structure layer 3a' via UV lights L1 that pass through the first transparent tooling 2a in order to harden the first 3D structure layer 3a' (S204). In addition, the first 3D structure layer 3a' can be made of resins. The internal mold space 20a of the first transparent tooling 2a has a size the same to that of the first 3D structure layer 3a'.

Referring to Fig. 2D, after the steps of S200 to S204, the method for manufacturing the substrate module M1 that has three-dimensional structures formed on the surface thereof has finished in the first embodiment. Hence, the substrate module M1 is composed of the color layer 4a, the substrate layer 1a, and the first 3D structure layer 3a'.

Moreover, the substrate layer 1a is formed on the bottom surface of the color layer 4a. The first 3D structure layer 3a' is formed on the bottom surface of the substrate layer 1a via using the first transparent tooling 2a and using UV lights L1 to pass through the first transparent tooling 2a for curing the first 3D structure layer 3a'.

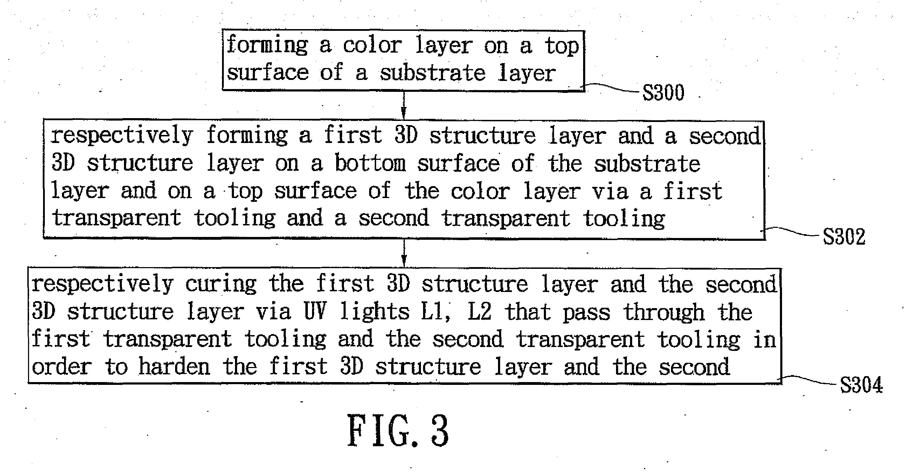

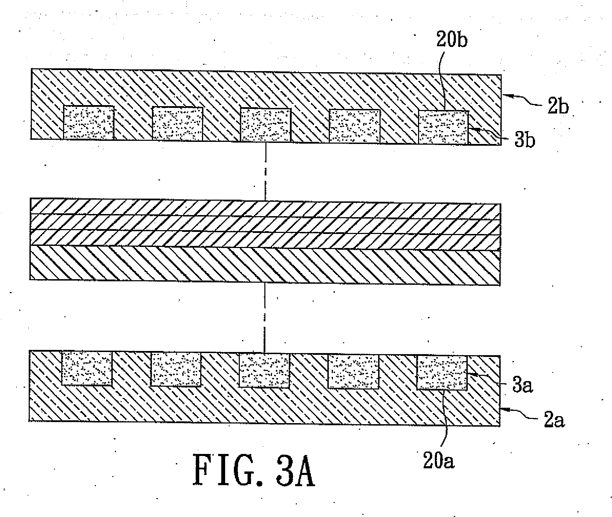

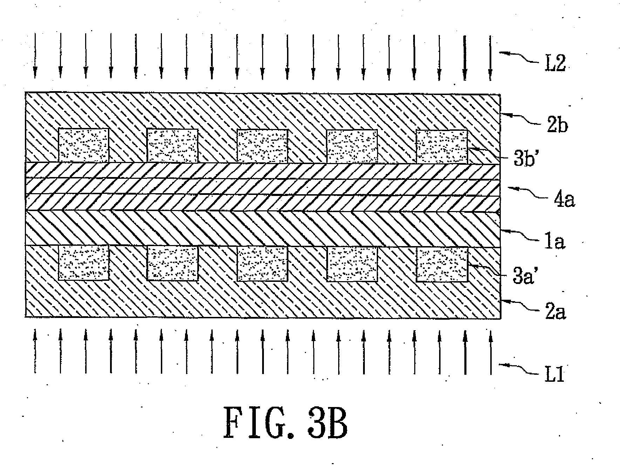

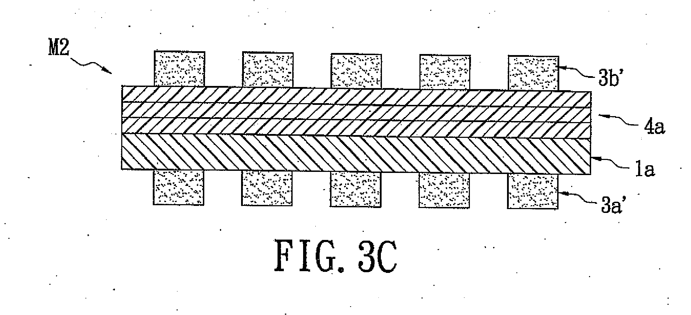

Fig. 3 shows a flow chart of a method for manufacturing a substrate module that has three-dimensional structures formed on a surface thereof according to the second embodiment of the present invention. Figs. 3A to 3C show cross-sectional, schematic views of a manufacturing process of a substrate module with 3D structure according to the second embodiment of the present invention, respectively.

Referring to Fig. 3, the second embodiment of the present invention provides a method for manufacturing a substrate module that has three-dimensional structures formed on a surface thereof. The method includes: firstly, referring to Fig. 2A, forming a color layer 4a on a top surface of a substrate layer 1a (S300).

Referring to Fig. 3A and 3B, the method further includes: respectively filling non-solid state resins 3a, 3b into an internal mold space 20a of a first transparent tooling 2a and an internal mold 20b of a second transparent tooling 2b, and then respectively curing the non-solid state resins 3a, 3b via lights such as UV lights L1, L2 that pass through the first transparent tooling 2a and the second transparent tooling 2b in order to harden the non-solid state resins 3a, 3b to form a first 3D structure layer 3a' and a second 3D structure layer 3b' on a bottom surface of the substrate layer 1a and a top surface of the color layer 4a.

In other words, after the step of S300, the method includes respectively forming a first 3D structure layer 3a' and a second 3D structure layer 3b' on a bottom surface of the substrate layer 1a and on a top surface of the color layer 4a via a first transparent tooling 2a and a second transparent tooling 2b (S302), and then respectively curing the first 3D structure layer 3a' and the second 3D structure layer 3b' via UV lights L1, L2 that pass through the first transparent tooling 2a and the second transparent tooling 2b in order to harden the first 3D structure layer 3a' and the second 3D structure layer 3b' (S304). In addition, both the first 3D structure layer 3a' and the second 3D structure layer 3b' can be made of resins. The internal mold space 20a of the first transparent tooling 2a has a size the same to that of the first 3D structure layer 3a'. The internal mold space 20b of the second transparent tooling 2b has a size the same to that of the second 3D structure layer 3b'.

Referring to Fig. 3C, after the steps of S300 to S304, the method for manufacturing the substrate module M2 that has three-dimensional structures formed on the surface thereof has finished in the second embodiment. Hence, the substrate module M2 is composed of the color layer 4a, the substrate layer 1a, the first 3D structure layer 3a', and the second 3D structure layer 3b'.

Moreover, the substrate layer 1a is formed on the bottom surface of the color layer 4a. The first 3D structure layer 3a' is formed on the bottom surface of the substrate layer 1a via using the first transparent tooling 2a and using UV lights L1 to pass through the first transparent tooling 2a for curing the first 3D structure layer 3a'. The second 3D structure layer 3b' is formed on the top surface of the color layer 4a via using the second transparent tooling 2b and using UV lights L2 to pass through the second transparent tooling 2b for curing the second 3D structure layer 3b'.

Therefore, the difference between the second embodiment and the first embodiment is that in the second embodiment the first 3D structure layer 3a' and the second 3D structure layer 3b' are respectively formed on the bottom surface of the substrate layer 1a and on the top surface of the color layer 4a via the first transparent tooling 2a and the second transparent tooling 2b at the same time.

In conclusion, the present invention uses the transparent tooling (2a or 2b), so the UV lights (L1 or L2) can pass through the transparent tooling (2a or 2b). In other words, the projection direction of the UV lights (L1 or L2) does not be limited. Hence, the present invention can solve the prior problem that the substrate layer of the prior art needs to be transparent and the color layer of the prior art does not be coated firstly. Moreover, the substrate module M2 has 3D structures formed on two sides thereof at the same time.

Therefore, the substrate module with three-dimensional structures farmed on the surface thereof and the method for manufacturing the same have following advantages:
1. The color layer 4a can be formed on the substrate layer 1a firstly, and then the first 3D structure layer 3a' is formed on the bottom surface of the substrate layer 1a or the second 3D structure layer 3b' is formed on the top surface of the color layer 4a. Hence, the yield rate of the substrate module M1 or M 2 is increased and the manufacture cost of the substrate module is decreased.
2. Because the first transparent tooling 2a and the second transparent tooling 2b are made of transparent materials, the UV lights L1, L2 can selectively pass through the first transparent tooling 2a and the second transparent tooling 2b or pass through the substrate layer 1 (as shown in Fig. 1B) the same as the prior art.
3. The projection direction of the UV lights L1, L2 do not be limited, so the first 3D structure layer 3a' and the second 3D structure layer 3b' are formed on the bottom surface and the top surface of the substrate module M2, respectively.

Although the present invention has been described with reference to the preferred best molds thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A substrate module (M1, M2) having three-dimensional structures formed on a surface thereof, comprising:
a color layer (4a);
a substrate layer (1a) formed on a bottom surface of the color layer (4a); and
a first 3D structure layer (3a') formed on a bottom surface of the substrate layer (1a) via using a first transparent tooling (2a) and using lights (L1) to pass through the first transparent tooling (2a) for curing the first 3D structure layer (3a').

2. The substrate module (M1, M2) as claimed in claim 1, wherein the color layer (4a) has more than one color (R, G, B).

3. The substrate module (M1, M2) as claimed in claim 1, wherein the first 3D structure layer (3a') is made of resins.

4. The substrate module (M1, M2 )as claimed in claim 1, wherein the lights (L1) are UV lights.

5. The substrate module (M2) as claimed in claim 1, further comprising a second 3D structure layer (3b') formed on a top surface of the color layer (4a) via using a second transparent tooling (2b) and using lights (L2) to pass through the second transparent tooling (2b) for curing the second 3D structure layer (3b').

6. The substrate module (M2) as claimed in claim 5, wherein the second 3D structure layer (3b') is made of resins.

7. The substrate module (M2) as claimed in claim 5, wherein the lights (L2) are UV lights.

8. A method for manufacturing a substrate module (M1, M2) that has three-dimensional structures formed on a surface thereof, comprising:
forming a color layer (4a) on a top surface of a substrate layer (1a);
forming a first 3D structure layer (3a') on a bottom surface of the substrate layer (1a) via a first transparent tooling (2a); and
curing the first 3D structure layer (3a') via lights (L1) passing through the first transparent tooling (2a) in order to harden the first 3D structure layer (3a').

9. The method as claimed in claim 8, wherein the color layer (4a) has more than one color (R, G, B).

10. The method as claimed in claim 8, wherein the first 3D structure layer (3a') is made of resins.

11. The method as claimed in claim 8, wherein the lights (L1) are UV lights.

12. The method as claimed in claim 8, further comprising:
forming a second 3D structure layer (3b') on a top surface of the color layer (4a) via a second transparent tooling (2b) ; and
curing the second 3D structure layer (3b') via lights (L2) passing through the second transparent tooling (2b) in order to harden the second 3D structure layer (3b').

13. The method as claimed in claim 12, wherein the second 3D structure layer (3b') is made of resins.

14. The method as claimed in claim 12, wherein the lights (L2) are UV lights.
